# EUROPEAN PATENT SPECIFICATION

(11) **EP 2 347 321 B1**
(45) Date of publication and mention of the grant of the patent: **18.09.2013**
(21) Application number: 09783401.4
(22) Date of filing: 25.09.2009
(51) Int. Cl.: G06F 3/033

(54) **COMMAND BY GESTURE INTERFACE**
BEFEHL DURCH GESTIKSCHNITTSTELLE
COMMANDE PAR INTERFACE GESTUELLE

(30) Priority: 25.09.2008 US 100254 P
(43) Date of publication of application: 27.07.2011
(73) Proprietor: Movea S.A, 38000 Grenoble (FR)
(72) Inventor: GOMEZ, David, F-38000 Grenoble (FR); SOUBEYRAT, Cyrille, F-38140 Reaumont (FR); CARITU, Yanis, F-38134 Saint Joseph de Riviere (FR)
(74) Representative: Nguyen Van Yen, Christian
(86) International application number: PCT/EP2009/062420
(87) International publication number: WO 2010/034795

(56) References cited:
- WO-A-2007/005932
- US-A1- 2007 208 528
- US-A1- 2007 291 112
- "EINSTELLUNGEN AUS DEM HANDGELENK" FUNKSCHAU, WEKA FACHZEITSCHRIFTEN VERLAG, POING, DE, vol. 63, no. 17, 9 August 1991 (1991-08-09), pages 62-63, XP000259565 ISSN: 0016-2841

## Description

The present invention deals with man machine interface capable of sending commands to electronic devices. More specifically, it applies to motion capture devices used for recognizing gestures used as a command code for said electronic devices, alone or in combination with other command interface such as buttons, scrolls, joysticks or the like. This type of interface is especially useful with computers, TVs or home theatres, audio equipment and game consoles. It can also be used to control any kind of electric equipment in a house or an office, such as a coffee machine, a washing machine, a refrigerator, a microwave oven, lights, heating or air conditioning, etc...Since one may have to control a plurality of devices in a plurality of states, it becomes necessary to increase significantly the number of hardware-represented states (for instance have tens of buttons on a remote control) or the number of software-represented states (for instance have tens of icons on the office screen of a PC). In both implementations, the interface may become complex to operate and not at all intuitive.
These user interfaces of the prior art have the limitation that they require an increasing number of buttons and/or graphical input areas on a display, so that the learning time of the user increases exponentially and his ability to memorise the corresponding codes decreases inversely. US patent application published under n°US2007/208528 discloses a remote control wherein a first orientation defines a first operating mode and a user can then use buttons which are programmed in the context set by set first operating mode to execute corresponding commands. But the remote control of this prior art document does not solve the problem of defining commands which can be input based on a second orientation of the device.

The present invention solves this problem by providing more than one new dimension of states representation and control by human gesture in addition to those by hardware and software.

The device of the invention, in various embodiments which may be combined, increases the number of functions of one or more appliances which may be controlled without increasing the number of buttons and/or graphical control zones of displays. This is provided by including an orientation sensor in the device, said orientation being one of the parameters to control the operating mode of the device.

To this effect, the invention discloses a device for control by a user of at least one appliance according to claim 1.

Advantageously, the device of the invention comprises a module to point at a designated appliance and direct said command signals at said designated appliance.

Advantageously, the pointing device points at a designated area on said designated appliance, said area comprising commands to be executed as a function of the command signals received from said device.

Advantageously, the device of the invention comprises a module to capture beats and/or snaps from the user and generate an output to be combined with the first and second set of command signals.

Advantageously, the device of the invention comprises a module to capture gestures from the user and generate an output to be combined with the first and second set of command signals.

Advantageously, the first set of command signals defines n modes, each of the n modes having a number of sub modes which are controlled by the second set of command signals.

Advantageously, a first subset of the first set of command signals corresponding to one of roll, pitch and yaw of the device and defines q modes, and a second subset of said first set of command signals corresponding to an other of roll, pitch and yaw of the device defines a value of each mode q.

Advantageously, the output of the orientation sensor defines an operating mode of the device.

Advantageously, the operating modes of the device comprise at least a gesture recognition mode, a pointing mode and a scroll mode.

Advantageously, the mode selector activates/deactivates a keyboard and the orientation sensor is worn on one wrist of one hand of the user.

Advantageously, the pointing function of the orientation sensor is deactivated as long as the hand of the user wearing said sensor stays in a first orientation fit for typing on the keyboard and is activated as long as said hand stays in a second orientation different from the first orientation.

The invention also discloses a system for control by a user of at least one appliance comprising at least a first device and at least a second device according of the invention, wherein said first device defines a number of first options for controlling said appliance and said second device defines a second number of second options as sub options of the first options.

The invention also discloses a method for control by a user of at least one appliance according to claim 12.

Advantageously, the method of the invention comprises a step of capturing orientation of a second device, said orientation of a second device being combined with said second set of command signals to generate a third set of command signals.

The device of the invention makes use of MEMS which are becoming cheaper and cheaper and is thus not costly to produce. The device can be of small dimensions and weight. Also, its software is easy to customise or maintain, for instance by providing applets to the user. Thus the user can get access to new programmes for controlling new appliances or implementing new modalities for controlling old appliances. Another advantage is that the command gestures can be chosen as simple and as discriminatory as possible, so that the user may intuitively use the device and the method of the invention.

The invention will be better understood and its various features and advantages will become apparent from the description of various embodiments and of the following appended figures:
- Figure 1a through 1d represent some interface devices of the prior art and the principle of mapping devices events to actions;
- Figure 2 represents an embodiment of the invention as a gaming interface;
- Figure 3 represents an embodiment of the invention as a remote control;
- Figure 4 represents an embodiment of the invention in combination with a keyboard;
- Figure 5 represents an embodiment of the invention as a 3D mouse with gesture recognition capacity.

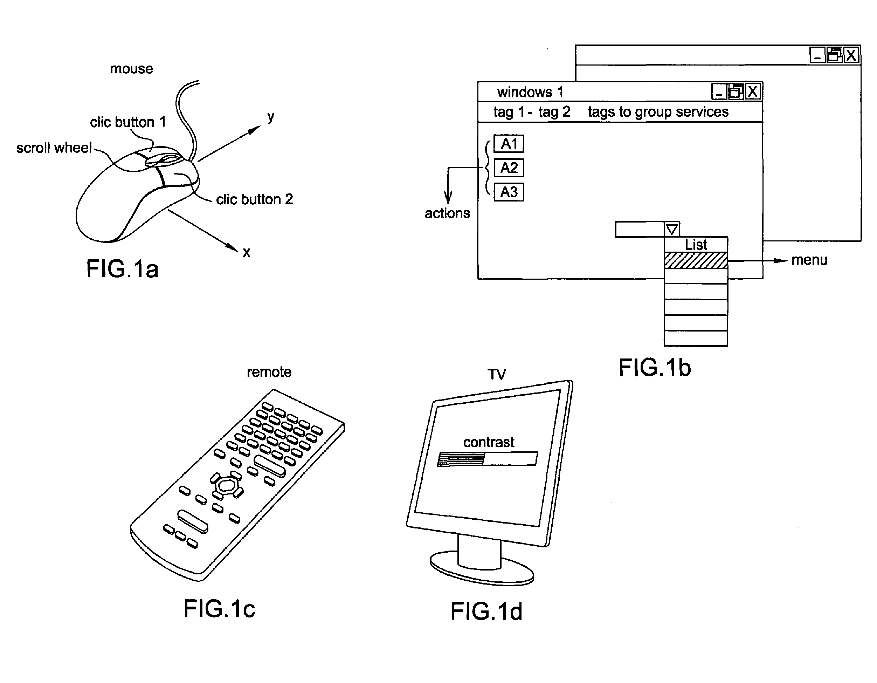

Figure 1 a through 1 d represent some interface devices of the prior art.

Figure 1a represents a traditional mouse which can be moved in an X, Y horizontal plane which mirrors a display of a computer. It has a scroll wheel which is used to move the view of the elements which are displayed upwards and downwards. It also has two click buttons which are programmed to trigger the display of a list of actions which are context dependent when first clicked. The application generally allows to navigate through the list of displayed actions and to select one of them to be executed when the user presses a second time the click button. The user has to manipulate the mouse from a fixed position and the number of possible selections is limited to two lists for each context.

Figure 1b represents a traditional Windows or Mac screen where menus or icons can be selected and scrolled to select an action in a list. Said selection can be performed either on a keyboard or using a mouse. The number of possible actions is multiplied by the number of graphical objects which can be selected. But the user still is limited in his capacity to move away from his seat. The user also has to learn and remember the position of the actions in a complex setting.

Figure 1c represents a traditional remote control. It may have numerous buttons, some of which offering a navigation facility. Remote controls are normally used with a TV set. A remote control of the prior art gives more freedom to the user than a mouse: he can control the TV set while moving. But the graphical information which is made available to him is rather limited, as exemplified in figure 1d: when controlling the contrast of the display, this information only is accessible on the display. Also, the hierarchical structure of the menus accessible from a remote control is rather poor. This does not allow for fast navigation between branches of the programmed hierarchical structure.

An object of the invention is to provide a control device which allows easier navigation between multiple selections through different branches of a tree. Also, the device of the invention combines the capacity of a remote control to point at an appliance in the 3D space and to use the graphical capacities of a mouse-type interface. With such capacities, the device of the invention offers the potential of a universal graphical remote control fit, in various embodiments, for controlling applications on a PC, programmes on a TV set, games on a game console and various home appliances.

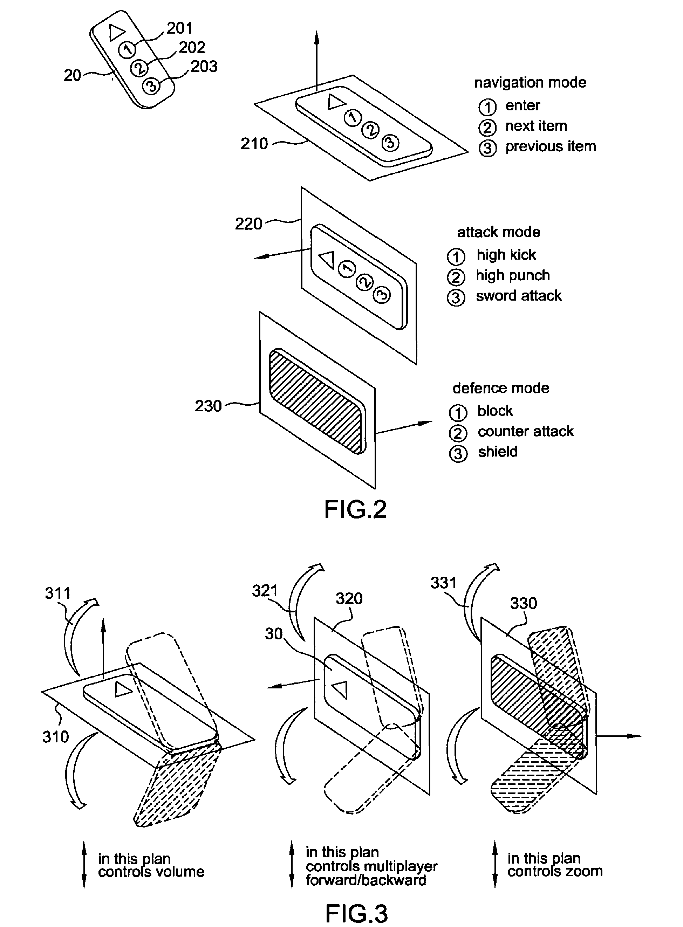

Figure 2 represents an example of the invention as a gaming interface. The device which is represented is an adaptation of an existing device such as an AirMouse™ by Movea™. An AirMouse comprises two sensors of the gyrometer type, each with a rotation axis. The gyrometers may be Epson™ XV3500. Their axes are orthogonal and deliver yaw (rotation angle around an axis which is parallel to the horizontal axis of a reference plane situated in front of the user of the AirMouse) and pitch (rotation angle around an axis parallel to the vertical axis of a reference plane situated in front of the user of the AirMouse). The rate of change in yaw and pitch as measured by the two gyrometers are transmitted by a radiofrequency protocol to a controller and converted by said controller, and adequate software present on the appliance to be controlled, in movements of a cursor on the display facing the user. The gyrometers may be arranged in the device casing to measure roll in lieu of yaw or pitch (Roll is the rotation angle of the device around an axis which is perpendicular to a reference plane situated in front of the user of the device). Other remote controls with an orientation sensing capacity may be used as the basis for implementing the invention.

In the example of figure 2, the AirMouse has been modified into a device 20 according to the invention, so that the gyrometers signals are used mainly to determine the orientation of the device in the air. In this example, three orientations only are used:
- An orientation where the device is horizontal, with its top facing upward (orientation 210);
- An orientation where the top of the device is facing leftward (orientation 220);
- An orientation where the top of the device is facing rightward (orientation 230).

The number of orientations which may be selected as meaningful may be higher or lower. There is a limit to the number of meaningful orientations which depends upon the resolution of the sensors and their processing and upon the ability of the users to discriminate between different orientations. It may not be practical to exceed a number of 8 different orientations (a resolution of 45°) unless specific processing is added to classify the gestures of the users.

The device 20 has three buttons 201, 202, 203, each allowing selection of an action, the action which is triggered depending upon the orientation of the device. In the example of a combat game of figure 2, when the device is in orientation 210, the user will be able to use the Navigation mode and button 201 will trigger an "Enter" action, while buttons 202 and 203 will respectively trigger a "Next Item" action and a "Previous Item" action. When the device is in orientation 220, the user will be able to use the Attack mode and buttons 201, 202, 203 will respectively trigger a "High Kick" action, a "High Punch" action and a "Sword Attack" action. When the device is in orientation 230, the user will be able to use the Defence mode and buttons 201, 202, 203 will respectively trigger a "Block" action, a "Counter Attack" action and a "Shield" action. Therefore, with only three buttons, 9 actions may be controlled.

Starting from an AirMouse or an other like device, a man skilled in the art will be capable of adding an adequate number of buttons to fit with the specification of the definite application and to programme the controller and/or a driver in the appliance to be controlled so that the actual values of the roll orientation in selected bands will systematically trigger the change in mode specified by the designer of the application. Yaw or pitch may also be selected as the orientation to be measured/classified. Selection of the adequate orientation will depend upon the context of the application.

Of course, with more discrete orientations and more buttons, more actions may be controlled. For instance with 6 orientations and 6 buttons, 36 actions may be controlled. Therefore, we can generalise the example of figure 2 into a device according to the invention capable of controlling n x p actions with n discrete orientations and p buttons.

Figure 3 represents an embodiment of the invention as a remote control 30 which may be used to control a TV set, a DVD or BRD set, an audio equipment, a home theatre or any appliance, simple or complex, with a number of functions which can take continuous values, such as volume, forward/backward read, zoom.

The starting point for building a remote control according to this invention may also be an AirMouse or a like device, while the buttons are not necessary. Device 30 as device 20 should have the capacity to discriminate between at least three roll orientations 310, 320, 330. In this example, these three orientations are the same as orientations 210, 220, 230 mentionned hereinabove. They are respectively assigned to the control of volume, forward/backward read and zoom. The actual control will be performed by the user by moving the device in the pitch plane. In other words, the value of the parameter defined by the roll orientation will be modulated by the value of the pitch. As a variant it is possible to envisage controlling discrete modes as well as continuous modes. A man skilled in the art will be capable of programming the controller and/or the appliance to be controlled so as to map the values of the parameters to be controlled, depending upon the roll orientation, to the pitch values.

It is possible to combine the embodiments of figures 2 and 3 in a single device according to the invention. The resulting device will have a number of buttons to control sub modes of the principal mode selected based on the classified roll of the device. Then each sub mode having a continuous (or discrete) value will then be controlled by the pitch of the device.

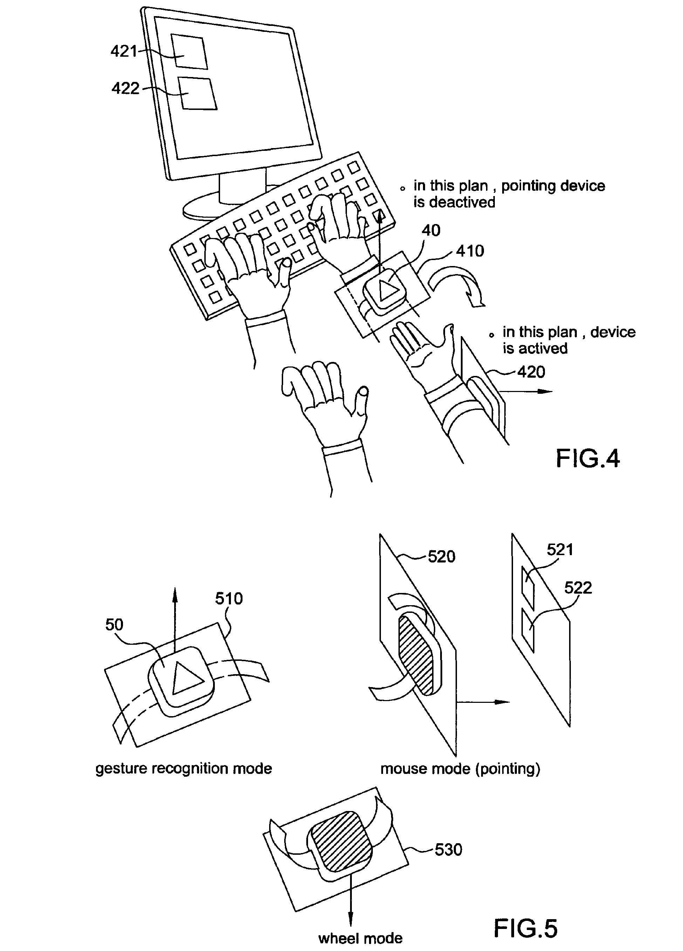

Figure 4 represents an embodiment of the invention in combination with a keyboard. As represented by the figure, a user, working with a computer and using a keyboard for doing so, also wears a device 40 attached at his wrist looking like a watch. One such device is a MotionPod™ by Movea. A MotionPod comprises a three axes accelerometer and a three axes magnetometer, a pre processing module to condition signals from the sensors measurements, a radiofrequency transmit module to the processing module and a battery. Such motion capture sensor is a "3A3M" sensor (3 Accelerometers axes and 3 Magnetometers axes). The accelerometers and magnetometers are micro sensors which are commercially available. They have a small form factor, low power consumption and a low cost. Examples of such micro accelerometers matching this specification are marketed by Kionix™ (KXPA4 3628). Other such devices are available from STM™, Freescale™ or Analog Device™. Likewise, examples of magnetometers for the MotionPod are marketed by HoneyWell™ (HMC1041Z for the vertical channel and HMC1042L for the 2 horizontal channels). Other such devices are available from Memsic™ or Asahi Kasei™. In a MotionPod, for the 6 signal channels, there is a combined filtering and, after analog to digital conversion (on 12 bits), the raw signals are transmitted to a base station (located on the appliance to be controlled or on a platform controlling more than one appliance) by a radiofrequency protocol operating in the Bluetooth™ band (2,4GHz), said protocol being optimised to minimise power consumption. The transmitted raw data are then processed by a controller (which may process input from more than one device) to be then directed to application software. The sampling frequency can be adjusted. By default, it is set at 200 Hz. Higher values (up to 3000 Hz) may be contemplated when a high resolution is necessary, for instance to detect shocks.

Other devices may be used as the basis to build a device for this embodiment of the invention. Having two categories of sensors is helpful to improve reliability of the measurements, but the invention may be implemented with one type of sensor only. A MotionPod may be used as a pointing device, for instance using a finger to determine the direction of pointing. As can be seen on figure 4, when the user types on the keyboard, device 40 remains substantially horizontal in orientation 410 and the pointing function of the device is not activated. Whenever the user wants to activate the pointing function, he just has to take his right hand off the keyboard and give it a 90° twist rightwards (in the example represented on the figure on to orientation 420). A man skilled in the art will be able to adapt the processing in the controller to discriminate between orientations 410 and 420 and trigger both corresponding modes. Keeping approximately the same orientation of his wrist, the user then can point at an area on the screen and use his finger as a mouse to select one of the (sub) options/ (sub) modes represented by areas 421, 422 on the display of figure 4. A man skilled in the art knows how to calculate the position of a cursor on a display from the position and orientation in space of the pointing device calculated from the output of the sensors. Also, a user of the device can possibly use his fingers to generate one or more beats which will be interpreted as equivalent to a single/double right button/left button click of a traditional mouse. For doing so, a method disclosed in WO2008/060102 can be used. To implement said method, the processing of the MotionPod controller is adapted to include low pass-band filtering means of the accelerometers signals and compare the filtered signals to thresholds which are representative of the level of noise above which a variation of the signal will be considered as a beat.

Device 40 may be adapted to left-handed users: in this case, the most convenient twist to activate the pointing mode will be leftwards.

Figure 5 represents an embodiment of the invention as a 3D mouse with gesture recognition capacity.

Device 50 represented on figure 5 can be seen as a variant of device 40 of figure 4. In this example, a MotionPod or a like device is adapted to have three modes corresponding respectively to orientations 510, 520 and 530: a gesture recognition mode, a pointing mode and a scroll mode. The pointing mode is identical to the one triggered by orientation 410 which has been described in connection with figure 4. There, the user may select one of the (sub) options/ (sub) modes represented by areas 521, 522 on the display of figure 5. In the scroll mode which is triggered by orientation 530, the displayed page will be scrolled upward or downward, depending upon the direction of the scroll angle, from the point last pointed out before the change of mode. In the gesture recognition mode triggered by orientation 510 of the device, gesture recognition algorithms are implemented. Such algorithms include the use of hidden markov models, linear time warping or dynamic time warping, such as those described in «Gesture Recognition Using The XWand» (D. Wilson, Camelie Mellon University, et A. Wilson, Microsoft Research, 2004). Gestures which are recognized may for example be letters (ie initials of an appliance or a function), figures (ie order of a function in a list of actions to be performed), etc...Gesture recognition may impose a learning mode, specifically when the system is multi user and when gestures reach a certain level of complexity.

It is also possible to combine the embodiments of the various figures in a manner wherein a user would carry a remote control 20, 30 in one hand (for example his right hand if he is right-handed) and wear on the wrist of his other hand, for example, a watch-like device 40, 50 comprising motion sensors. In a combined embodiment of this kind, the user will be able to control the selection of top level modes (gesture recognition, mouse, scroll, or an other set of modes) with the device 40, 50 activated by the motion of one of his hands and to operate selection of sub modes by orienting the remote control 20, 30 in an adequate manner in one of pitch, yaw or roll, then selecting options in these modes of a further level down by pushing the adequate button and/or orienting said remote control in one other of pitch, yaw or roll, as described hereinabove. This embodiment is advantageous because it increases the number of modes which can be accessed in a menu (n x p x q x r instead of n x p x q) and/or increases the capacity of the system with two devices to discriminate between modes.

The examples disclosed in this specification are only illustrative of some embodiments of the invention. They do not in any manner limit the scope of said invention which is defined by the appended claims.

## Claims

1. Device (30, 40, 50) for control by a user of at least one appliance comprising at least one sensor for capturing at least a first set of motion signals (310, 320, 330, 410, 420, 510, 520, 530) representative of an orientation of said device and a second set of motion signals (311, 321, 331, 421, 422, 521, 522) from said at least one sensor, an interface to a processor, a mode selector for the user to select operating modes of one of said device and said appliance, where a first operating mode among a plurality of operating modes is selected depending on said orientation of said device, an interface to at least a communication link to convey command signals to said appliance, said device being **characterised in that** said user is offered a selection among a second set of operating modes depending upon said first operating mode, said selection of a second operating mode being based on the second set of motion signals and said selection generating a set of command signals representative of said second operating mode.

2. The device of claim 1, further comprising a module to point at a designated appliance and direct said command signals at said designated appliance.

3. The device of claim 2, wherein the pointing device points at a designated area on said designated appliance, said area comprising commands to be executed as a function of the command signals received from said device.

4. The device of any of claims 1 to 3, further comprising a module to capture beats and/or snaps from the user and generate an output to be combined with the set of command signals.

5. The device of any of claims 1 to 4, further comprising a module to capture gestures from the user and generate an output to be combined with the set of command signals.

6. The device of any of claims 1 to 5, wherein the first set of motion signals defines n modes, each of the n modes having a number of sub modes which are controlled by the set of command signals.

7. The device of any of claims 1 to 5, wherein a first subset of the first set of motion signals corresponding to one of roll, pitch and yaw of the device and defines q modes, and a second subset of said first set of motion signals corresponding to another of roll, pitch and yaw of the device defines a value of each mode q.

8. The device of claim 1, wherein the operating modes of the device comprise at least a gesture recognition mode, a pointing mode and a scroll mode.

9. The device of claim 8, wherein the mode selector (421, 422) activates/deactivates a keyboard and the orientation sensor is worn on one wrist of one hand of the user.

10. The device of claim 9, wherein the pointing function of the orientation sensor is deactivated as long as the hand of the user wearing said sensor stays in a first orientation (410) fit for typing on the keyboard and is activated as long as said hand stays in a second orientation (420) different from the first orientation (410).

11. System for control by a user of at least one appliance comprising at least a first device (20, 30) according to any one of claims 2 to 7 and at least a second device (40, 50) according of any one of claims 8 to 10, wherein said first device defines a number of first options for controlling said appliance and said second device defines a second number of second options as sub options of the first options.

12. Method for control by a user of at least one appliance comprising at least a step for capturing by a motion sensor encased in a device borne by said user at least a first set of motion signals (310, 320, 330, 410, 420, 510, 520, 530) representative of an orientation of said device and a second set of motion signals (201, 202, 203, 311, 321, 331, 421, 422, 521, 522) from said at least one sensor, a step of interfacing to a processor, a step of using a mode selector for the user to select operating modes of one of said device and said appliance, where a first operating mode among a plurality of operating modes is selected depending on said orientation of said device, a step of interfacing to at least a communication link to convey command signals to said appliance, said method being **characterised in that** said user is offered a selection among a second set of operating modes depending upon said first operating mode, said selection of a second operating mode being based on the second set of motion signals and said selection generating a set of command signals representative of said second operating mode.

13. Method according to claim 12, further comprising a step of capturing orientation of a second device, said orientation of a second device being combined with said set of command signals to generate a second set of command signals.

## Patentansprüche

1. Vorrichtung (30, 40, 50) zur Steuerung mindestens eines Gerätes durch einen Benutzer, umfassend: mindestens einen Sensor zur Erfassung mindestens einer ersten Menge von Bewegungssignalen (310, 320, 330, 410, 420, 510, 520, 530), die eine Ausrichtung der Vorrichtung darstellen, und einer zweiten Menge von Bewegungssignalen (311, 321, 331, 421, 422, 521, 522) von dem mindestens einen Sensor aus, eine Schnittstelle zu einem Prozessor, eine Moduswähleinrichtung für den Benutzer, um Betriebsmodi der Vorrichtung oder des Gerätes zu wählen, wobei ein erster Betriebsmodus unter einer Vielzahl von Betriebsmodi in Abhängigkeit von der Ausrichtung der Vorrichtung gewählt wird, eine Schnittstelle zu zumindest einer Kommunikationsverbindung, um Befehlssignale an das Gerät zu befördern, wobei die Vorrichtung **dadurch gekennzeichnet ist, dass** dem Benutzer eine Wahl aus einer zweiten Menge von Betriebsmodi in Abhängigkeit von dem ersten Betriebsmodus angeboten wird, wobei die Wahl eines zweiten Betriebsmodus auf der zweiten Menge von Bewegungssignalen beruht und die Wahl eine Menge von Befehlssignalen erzeugt, die den zweiten Betriebsmodus darstellen.

2. Vorrichtung nach Anspruch 1, ferner umfassend ein Modul, das dazu dient, auf ein angegebenes Gerät zu zeigen und Befehlssignale an dieses angegebene Gerät zu senden.

3. Vorrichtung nach Anspruch 2, wobei die Zeigevorrichtung auf einen angegebenen Bereich an dem angegebenen Gerät zeigt, wobei der Bereich Befehle umfasst, die als Funktion der von der Vorrichtung empfangenen Befehlssignale ausgeführt werden.

4. Vorrichtung nach einem der Ansprüche 1 bis 3, ferner umfassend ein Modul, das dazu dient, Taktschläge und/oder Schnalzgeräusche vom Benutzer zu erfassen und ein Ausgangssignal zu erzeugen, das mit der Menge von Befehlssignalen zu kombinieren ist.

5. Vorrichtung nach einem der Ansprüche 1 bis 4, ferner umfassend ein Modul, das dazu dient, Gesten vom Benutzer zu erfassen und ein Ausgangssignal zu erzeugen, das mit der Menge von Befehlssignalen zu kombinieren ist.

6. Vorrichtung nach einem der Ansprüche 1 bis 5, wobei die erste Menge von Bewegungssignale n Modi definiert, wobei jeder der n Modi eine Anzahl von Untermodi hat, die durch die Menge von Befehlssignalen gesteuert wird.

7. Vorrichtung nach einem der Ansprüche 1 bis 5, wobei eine erste Untermenge der ersten Menge von Bewegungssignalen, die einer, nämlich einer Roll-, Nick- oder Gierbewegung der Vorrichtung entspricht, q Modi definiert und eine zweite Untermenge der ersten Menge von Bewegungssignalen, die einer anderen der Roll-, Nick- oder Gierbewegung der Vorrichtung entspricht, einen Wert für jeden Modus q definiert.

8. Vorrichtung nach Anspruch 1, wobei die Betriebsmodi der Vorrichtung mindestens einen Gestenerkennungsmodus, einen Zeigemodus und/oder einen Scroll-Modus umfassen.

9. Vorrichtung nach Anspruch 8, wobei die Moduswähleinrichtung (421, 422) eine Tastatur aktiviert/deaktiviert und der Ausrichtungssensor an einem Handgelenk einer Hand des Benutzers getragen wird.

10. Vorrichtung nach Anspruch 9, wobei die Zeigefunktion des Ausrichtungssensors so lange deaktiviert ist, wie die Hand des Benutzers, der den Sensor trägt, in einer ersten Ausrichtung (410) verbleibt, die zum Eintippen auf der Tastatur geeignet ist, und so lange aktiviert ist, wie die Hand in einer zweiten Ausrichtung (420) verbleibt, die sich von der ersten Ausrichtung (410) unterscheidet.

11. System zur Steuerung mindestens eines Gerätes durch einen Benutzer, umfassend: mindestens eine erste Vorrichtung (20, 30) nach einem der Ansprüche 2 bis 7 und mindestens eine zweite Vorrichtung (40, 50) nach einem der Ansprüche 8 bis 10, wobei die erste Vorrichtung eine Anzahl von ersten Optionen zur Steuerung des Gerätes definiert und die zweite Vorrichtung eine zweite Anzahl von Optionen als Unteroptionen der ersten Optionen definiert.

12. Verfahren zur Steuerung mindestens eines Gerätes durch einen Benutzer, umfassend: mindestens einen Schritt, der dazu dient, dass ein Bewegungssensor, der in einer von dem Benutzer getragenen Vorrichtung eingeschlossen ist, mindestens eine erste Menge von Bewegungssignalen (310, 320, 330, 410, 420, 510, 520, 530), die eine Ausrichtung der Vorrichtung darstellt, und eine zweite Menge von Bewegungssignalen (201, 202, 203, 311, 321, 331, 421, 422, 521, 522) von dem mindestens einen Sensor aus erfasst, einen Schritt des Anpassens an einen Prozessor, einen Schritt des Verwendens einer Moduswähleinrichtung für den Benutzer, um Betriebsmodi der Vorrichtung oder des Geräts zu wählen, wobei ein erster Betriebsmodus unter einer Vielzahl von Betriebsmodi in Abhängigkeit von der Ausrichtung der Vorrichtung gewählt wird, einen Schritt des Anpassens an mindestens eine Kommunikationsverbindung, um Befehlssignale an das Gerät zu befördern, wobei das Verfahren **dadurch gekennzeichnet ist, dass** dem Benutzer eine Wahl unter einer zweiten Menge von Betriebsmodi in Abhängigkeit von dem ersten Betriebsmodus angeboten wird, wobei die Wahl eines zweiten Betriebsmodus auf der zweiten Menge von Bewegungssignalen beruht und die Wahl eine Menge von Befehlssignalen erzeugt, die den zweiten Betriebsmodus darstellen.

13. Verfahren nach Anspruch 12, ferner umfassend folgenden Schritt: Erfassen der Ausrichtung einer zweiten Vorrichtung, wobei die Ausrichtung einer zweiten Vorrichtung mit dem Satz von Befehlssignalen kombiniert wird, um einen zweiten Satz von Befehlssignalen zu erzeugen.

## Revendications

1. Dispositif (30, 40, 50) permettant à un utilisateur de commander au moins un appareil comprenant au moins un capteur destiné à capturer au moins un premier ensemble de signaux de mouvement (310, 320, 330, 410, 420, 510, 520, 530) représentant une orientation dudit dispositif et un second ensemble de signaux de mouvement (311, 321, 331, 421, 422, 521, 522) en provenance dudit au moins un capteur, une interface vers un processeur, un sélecteur de mode permettant à l'utilisateur de sélectionner des modes d'exploitation de l'un dudit dispositif et dudit appareil, dans lequel un premier mode d'exploitation parmi une pluralité de modes d'exploitation est sélectionné en fonction de ladite orientation dudit dispositif, une interface vers au moins une liaison de communication en vue d'acheminer des signaux de commande vers ledit appareil, ledit dispositif étant **caractérisé en ce que** ledit utilisateur se voit proposer une sélection parmi un second ensemble de modes d'exploitation en fonction dudit premier mode d'exploitation, ladite sélection d'un second mode d'exploitation étant basée sur le second ensemble de signaux de mouvement et ladite sélection générant un ensemble de signaux de commande représentatifs dudit second mode d'exploitation.

2. Dispositif selon la revendication 1, comprenant en outre un module destiné à pointer vers un appareil désigné et à envoyer lesdits signaux de commande audit appareil désigné.

3. Dispositif selon la revendication 2, dans lequel le dispositif de pointage pointe vers une zone désignée sur ledit appareil désigné, ladite zone comprenant des commandes à exécuter en fonction des signaux de commande reçus à partir dudit dispositif.

4. Dispositif selon l'une quelconque des revendications 1 à 3, comprenant en outre un module destiné à capturer des battements et/ou des claquements provenant de l'utilisateur et à générer une sortie à combiner avec l'ensemble de signaux de commande.

5. Dispositif selon l'une quelconque des revendications 1 à 4, comprenant en outre un module destiné à capturer des gestes de l'utilisateur et à générer une sortie à combiner avec l'ensemble de signaux de commande.

6. Dispositif selon l'une quelconque des revendications 1 à 5, dans lequel le premier ensemble de signaux de mouvement définit n modes, chacun des n modes présentant un nombre de sous-modes qui sont commandés par l'ensemble de signaux de commande.

7. Dispositif selon l'une quelconque des revendications 1 à 5, dans lequel un premier sous-ensemble du premier ensemble de signaux de mouvement correspondant à l'un parmi un roulis, un tangage et un lacet du dispositif définit q modes, et un second sous-ensemble dudit premier ensemble de signaux de mouvement correspondant à un autre parmi un roulis, un tangage et un lacet du dispositif définit une valeur de chaque mode q.

8. Dispositif selon la revendication 1, dans lequel les modes d'exploitation du dispositif comprennent au moins un mode de reconnaissance de gestes, un mode de pointage et un mode de défilement.

9. Dispositif selon la revendication 8, dans lequel le sélecteur de mode (421, 422) active / désactive un clavier et le capteur d'orientation est porté au poignet d'une main de l'utilisateur.

10. Dispositif selon la revendication 9, dans lequel la fonction de pointage du capteur d'orientation est désactivée tant que la main de l'utilisateur portant ledit capteur reste dans une première orientation (410) adaptée à une saisie au clavier, et est activée tant que ladite main reste dans une seconde orientation (420) différente de la première orientation (410).

11. Système permettant à un utilisateur de commander au moins un appareil comprenant au moins un premier dispositif (20, 30) selon l'une quelconque des revendications 2 à 7, et au moins un second dispositif (40, 50) selon l'une quelconque des revendications 8 à 10, dans lequel ledit premier dispositif définit un nombre de premières options pour commander ledit appareil et ledit second dispositif définit un second nombre de secondes options en tant que sous-options des premières options.

12. Procédé de commande, par un utilisateur, d'au moins un appareil, comprenant au moins une étape de capture, par un capteur de mouvement intégré dans un dispositif porté par ledit utilisateur, d'au moins un premier ensemble de signaux de mouvement (310, 320, 330, 410, 420, 510, 520, 530) représentant une orientation dudit dispositif et un second ensemble de signaux de mouvement (201, 202, 203, 311, 321, 331, 421, 422, 521, 522) en provenance dudit au moins un capteur, une étape d'interfaçage avec un processeur, une étape d'utilisation d'un sélecteur de modes permettant à l'utilisateur de sélectionner des modes d'exploitation de l'un dudit dispositif et dudit appareil, dans lequel un premier mode d'exploitation parmi une pluralité de modes d'exploitation est sélectionné en fonction de ladite orientation dudit dispositif, une étape d'interfaçage vers au moins une liaison de communication en vue d'acheminer des signaux de commande vers ledit appareil, ledit procédé étant **caractérisé en ce que** ledit utilisateur se voit proposer une sélection parmi un second ensemble de modes d'exploitation en fonction dudit premier mode d'exploitation, ladite sélection d'un second mode d'exploitation étant basée sur le second ensemble de signaux de mouvement et ladite sélection générant un ensemble de signaux de commande représentatifs dudit second mode d'exploitation.

13. Procédé selon la revendication 12, comprenant en outre une étape de capture de l'orientation d'un second dispositif, ladite orientation d'un second dispositif étant combinée avec ledit ensemble de signaux de commande en vue de générer un second ensemble de signaux de commande.
